Europäisches Patentamt

European Patent Office

Office européen des brevets

(19)

(11) EP 1 442 659 A1

(12) EUROPEAN PATENT APPLICATION
published in accordance with Art. 158(3) EPC

(43) Date of publication:
04.08.2004 Bulletin 2004/32

(51) Int Cl.⁷: **A01N 59/16**, C08J 5/00,
C08K 9/08, C08L 101/00,
D01F 1/10

(21) Application number: 02801567.5

(22) Date of filing: 15.10.2002

(86) International application number:
PCT/JP2002/010671

(87) International publication number:
WO 2003/032734 (24.04.2003 Gazette 2003/17)

(84) Designated Contracting States:
AT BE BG CH CY CZ DE DK EE ES FI FR GB GR
IE IT LI LU MC NL PT SE SK TR

(30) Priority: 15.10.2001 JP 2001317512

(71) Applicants:
• FUJI XEROX CO., LTD
Minato-ku Tokyo 107-0052 (JP)
• Sangi Co., Ltd.
Tokyo 104-8440 (JP)

(72) Inventors:
• SASAKI, Yuki, Fuji Xerox Co., Ltd.
Minamiashigara-shi, Kanagawa 250-0111 (JP)

• MATSUMURA, Yasuo, Fuji Xerox Co., Ltd.
Minamiashigara-shi, Kanagawa 250-0111 (JP)
• AOKI, Takayoshi, Fuji Xerox Co., Ltd.
Minamiashigara-shi, Kanagawa 250-0111 (JP)
• TOMINAGA, Etsuo, Fuji Xerox Co., Ltd.
Minamiashigara-shi, Kanagawa 250-0111 (JP)
• SAKUMA, Shuji, Sangi Co., Ltd.
Chuo-ku, Tokyo 104-8440 (JP)
• SAITO, Tomoki, Sangi Co., Ltd.
Chuo-ku, Tokyo 104-8440 (JP)

(74) Representative: Grünecker, Kinkeldey,
Stockmair & Schwanhäusser Anwaltssozietät
Maximilianstrasse 58
80538 München (DE)

(54) **INORGANIC ANTIMICROBIAL AGENT, ANTIMICROBIAL MOLDED RESIN ARTICLES USING THE SAME AND PROCESS FOR THE PRODUCTION THEREOF**

(57) The present invention relates to an inorganic antibacterial agent comprising a thermoplastic resin and inorganic antibacterial particles dispersed in the resin, and a shape factor SF2 defined by the following formula:

$$SF2 = 100 \pi L^2 / (4A)$$

(Wherein L represents a perimeter of a plane image of a particle which is obtained from observation of a slice for inorganic antibacterial agent using a transmission electron microscope, and A represents the area of the plane image.) is not more than 200, and the existing ratio defined by the following formula: Existing ratio (%) = $100\times$ (number of inorganic antibacterial particles having SF2 of not more than 200) / (number of particles used for calculation of SF2) is not less than 80%. According to the present invention, when the inorganic antibacterial agent is dispersed in the antibacterial molded resin product, the dispersion of inorganic antibacterial agent is improved since inorganic antibacterial particles are dispersed in the thermoplastic resin. Moreover, inorganic antibacterial particles are dispersed homogeneously in the base resin since the occurrence of agglomeration and localization are well prevented in the thermoplastic resin.

Fig.1

**Description**

**Technical Field**

The present invention relates to an inorganic antibacterial agent, an antibacterial molded resin product using the agent and method of making the product.

**Background Art**

In general, an antibacterial molded resin product such as an antibacterial fiber comprises base resin and antibacterial agent dispersed therein. The antibacterial agent is roughly classified to inorganic antibacterial agent and organic antibacterial agent. Recently, because of higher security for human body and longer duration of the antibacterial activity, an inorganic antibacterial agent is commonly used as an antibacterial agent.

However, poor compatibility of inorganic antibacterial agent with base resin results in the occurrence of agglomerations of inorganic antibacterial agent due to its low dispersibility in the base resin. This gives that the inorganic antibacterial agent sometimes fails to express sufficient antibacterial activity.

As a result, sufficient antibacterial activity requires more amount of the antibacterial agent, resulting in increasing production cost. Furthermore, the coarsening of particles due to the agglomeration of the agent sometimes results in filter failures such as clogging of spinning packed filter used in forming fiber, the abrasion of the contacting parts with the agent for manufacturing equipment, and the decrease of strength or the aggravation of touch and texture of products.

Therefore, antibacterial agents are often mixed to base resin using so-called master-batch technique to improve dispersibility of the inorganic agent in base resin. In order to further improve the compatibility of inorganic antibacterial agent with base resin, additives such as dispersing or slipping agent are widely used in a mixing process of the resin and the agent.

**Disclosure of the Invention**

When antibacterial molded resin products are manufactured using the procedure described above, the antibacterial molded resin products to be obtained are greatly affected by dispersing and slipping agents. This raises a possibility for degradation of properties or texture (such as strength declining), antibacterial activity or increasing of cost.

Although it is already known that the mechanical dispersion of antibacterial agent (Japanese Patent Laid-Open No. Hei 05 (1993)-255515, A, Japanese Patent Laid-Open No. 2000-273313, A) or modification of base resin (Japanese Patent Laid-Open No. Hei 08 (1996)-20680, A) to disperse the agent without using dispersing or slipping agents, those procedures have not dissolved the problems such as dispersibility to base resin or agglomerations of inorganic antibacterial agent in manufacturing processes.

An object of the present invention is to provide an inorganic antibacterial agent having sufficient antibacterial activity and strength of antibacterial molded resin products and a method of making the same.

With the foregoing circumstances in view, the present inventors have carried out an extensive investigation. As a result, it has been found that preparing an inorganic antibacterial agent, which is premixed with thermoplastic resin and agglomerations and localization of inorganic antibacterial particles in the thermoplastic resin are well controlled, and mixing the agent with base resin can manage the dispersibility of inorganic antibacterial agent to base resin to improve the dispersibility without using dispersing or slipping agent, thus leading to completion of the present invention.

Specifically the present invention comprises a thermoplastic resin and inorganic antibacterial particles, wherein the inorganic antibacterial particles are dispersed in the resin, said inorganic antibacterial agent satisfying any one of the following conditions (1) to (3) :

(1) An existing ratio of the inorganic antibacterial particles, which is calculated by the following formula, is not less than 80%.
The formula is:

$$\text{Existing ratio (\%)} = 100 \times \text{(Number of the inorganic}$$

$$\text{antibacterial particles having SF2 of not more than 200) / (a}$$

$$\text{total number of the inorganic antibacterial particles used}$$

for calculating SF2)

Wherein SF2 is a shape factor defined by the following formula;

$$SF2 = 100 \pi L^2/(4A)$$

(Wherein L represents a perimeter of a plane image of the inorganic antibacterial particle, and A represents an area of the plane image of the inorganic antibacterial particle, said L and A obtained by observing a slice of the inorganic antibacterial agent using a transmission electron microscope.)
(2) An existing ratio of the inorganic antibacterial particles having a particle diameter of not less than 2 μm, which is calculated by the following formula, is not more than 1%.
The formula is:

Existing ratio (%) = 100× (number of the inorganic

antibacterial particles having a diameter of not less than

2 μm)/(a total number of the inorganic antibacterial

particles used for measuring the particle diameter)

(3) An existing ratio of the inorganic antibacterial particles per 1 μm$^2$ is not less than 70%, wherein the existing ratio is calculated by the following formula, and is obtained by observing a slice of the inorganic antibacterial agent using a transmission electron microscope.
The formula is:

Existing ratio (%) = 100× (Number of domains in which the

inorganic antibacterial particles are present)/(a total

number of domains which is observed if the inorganic

antibacterial particles are present or not).

In the present invention, inorganic antibacterial particles are dispersed in thermoplastic resin. When inorganic antibacterial agent is dispersed the in base resin for antibacterial molded resin products, the dispersion of inorganic antibacterial agent in base resin is improved because the compatibility of base resin with thermoplastic resin is higher than the compatibility of base resin with inorganic antibacterial particles. Moreover, the inorganic antibacterial agent is sufficiently prevented from agglomeration and localization of the inorganic antibacterial particles in thermoplastic resin, so that the inorganic antibacterial particles can be dispersed homogeneously in base resin. This leads to a sufficient improvement of antibacterial activity and mechanical strength of the antibacterial molded resin products. The manufacturing cost is also reduced since the minimum amount of the inorganic antibacterial agent in base resin is required to show the certain level of antibacterial activity. Furthermore, no agglomeration of inorganic antibacterial particles can be free the antibacterial molded resin product from a change in quality and the abrasion of manufacturing equipment for the antibacterial molded resin product. Still furthermore, the inorganic antibacterial agent can keep the properties and texture of the base resin without addition of dispersing or slipping agent in the manufacturing process of antibacterial molded resin products since the inorganic antibacterial particles are dispersed homogeneously.
The present invention comprises a method of making an antibacterial molded resin product comprising a process of dispersing an inorganic antibacterial agent in a base resin, wherein the inorganic antibacterial agent includes a thermoplastic resin and inorganic antibacterial particles dispersed in the thermoplastic resin, said inorganic antibacterial agent satisfying any one of the following conditions (1) to (3):

(1) An existing ratio of the inorganic antibacterial particles, which is calculated by the following formula, is not less than 80%.

The formula is:

$$\text{Existing ratio (\%)} = 100 \times \text{(Number of the inorganic}$$

$$\text{antibacterial particles having SF2 of not more than 200) / (a}$$

$$\text{total number of the inorganic antibacterial particles used}$$

$$\text{for calculating SF2)}$$

Wherein SF2 is a shape factor defined by the following formula;

$$\text{SF2} = 100 \, \pi \, L^2/(4A)$$

(Wherein L represents a perimeter of a plane image of the inorganic antibacterial particle, and A represents an area of the plane image of the inorganic antibacterial particle, said L and A obtained by observing a slice of the inorganic antibacterial agent using a transmission electron microscope.)

(2) An existing ratio of the inorganic antibacterial particles having a particle diameter of not less than 2 $\mu$m, which is calculated by the following formula, is not more than 1%.

The formula is:

$$\text{Existing ratio (\%)} = 100 \times \text{(number of the inorganic}$$

$$\text{antibacterial particles having a diameter of not less than}$$

$$\text{2 } \mu\text{m)/(a total number of the inorganic antibacterial}$$

$$\text{particles used for measuring the particle diameter)}$$

(3) An existing ratio of the inorganic antibacterial particles per 1 $\mu$m$^2$ is not less than 70%, wherein the existing ratio is calculatedby the following formula, and is obtained by observing a slice of the inorganic antibacterial agent using a transmission electron microscope.

The formula is:

$$\text{Existing ratio (\%)} = 100 \times \text{(Number of domains in which the}$$

$$\text{inorganic antibacterial particles are present)/(a total}$$

$$\text{number of domains which is observed if the inorganic}$$

$$\text{antibacterial particles are present or not).}$$

In the method of the present invention, the inorganic antibacterial agent, in which agglomeration and localization of inorganic antibacterial particles in thermoplastic resin is sufficiently prevented, is dispersed in base resin. Agglomeration and localization of inorganic antibacterial agent in antibacterial molded resin products is sufficiently prevented. This leads to a sufficient improvement of antibacterial activity and mechanical strength of the resin products. The manufacturing cost is also reduced since the minimum amount of the inorganic antibacterial agent in the base resin is required to express a certain level of antibacterial activity. Furthermore, no agglomeration of inorganic antibacterial agent can prevent the antibacterial molded resin product from a change in quality and abrasion of manufacturing equipment for the antibacterial molded resin product. Moreover, the inorganic antibacterial agent can keep the properties and texture of the base resin without addition of dispersing or slipping agent in the manufacturing process of antibacterial molded resin products since the inorganic antibacterial particles are dispersed homogeneously.

The present invention comprises an antibacterial molded resin product comprising an inorganic antibacterial agent and a basic resin, wherein the inorganic antibacterial agent is dispersed in the basic resin, said inorganic antibacterial agent including a thermoplastic resin and inorganic antibacterial particles, wherein the inorganic antibacterial particles are dispersed in the thermoplastic resin, said inorganic antibacterial agent satisfying any one of the following conditions (1) to (3):

(1) An existing ratio of the inorganic antibacterial particles, which is calculated by the following formula, is not less than 80%.
The formula is:

$$\text{Existing ratio (\%)} = 100 \times \text{(Number of the inorganic}$$

$$\text{antibacterial particles having SF2 of not more than 200)/(a}$$

$$\text{total number of the inorganic antibacterial particles used}$$

$$\text{for calculating SF2)}$$

Wherein SF2 is a shape factor defined by the following formula;

$$SF2 = 100 \pi L^2/(4A)$$

(Wherein L represents a perimeter of a plane image of the inorganic antibacterial particle, and A represents an area of the plane image of the inorganic antibacterial particle, said L and A obtained by observing a slice of the inorganic antibacterial agent using a transmission electron microscope.)
(2) An existing ratio of the inorganic antibacterial particles having a particle diameter of not less than 2 μm, which is calculated by the following formula, is not more than 1%.
The formula is:

$$\text{Existing ratio (\%)} = 100 \times \text{(number of the inorganic}$$

$$\text{antibacterial particles having a diameter of not less than}$$

$$2 \text{ μm)/(a total number of the inorganic antibacterial}$$

$$\text{particles used for measuring the particle diameter)}$$

(3) An existing ratio of the inorganic antibacterial particles per 1 $\mu m^2$ is not less than 70%, wherein the existing ratio is calculatedbythe following formula, and is obtained by observing a slice of the inorganic antibacterial agent using a transmission electron microscope.

The inorganic antibacterial molded resin product has the well-dispersed inorganic antibacterial agent in base resin since the inorganic antibacterial particles are dispersed in thermoplastic resin having good compatibility with the base resin. Moreover, the inorganic antibacterial agent is sufficiently prevented from agglomeration and localization of the inorganic antibacterial particles in thermoplastic resin, so that the inorganic antibacterial particles can be dispersed homogeneously in base resin. This leads to a sufficient improvement of antibacterial activity and mechanical strength of the resin products. The manufacturing cost is also reduced since the minimum amount of the inorganic antibacterial agent in base resin is required to express a certain level of antibacterial ability. Furthermore, no agglomeration of inorganic antibacterial agent can prevent the antibacterial molded resin product from a change in quality and abrasion of manufacturing equipment for the product.
Note that in the present invention of an inorganic antibacterial agent and an antibacterial molded resin product disclosed above, the term "existing ratio of inorganic antibacterial particles" refers to as the existing ratio where the inorganic antibacterial particles are present in an image obtained from observation of inorganic antibacterial agent using a transmission electron microscope. Also "inorganic antibacterial particles" may comprise not only one inorganic antibacterial particle thereof, but also agglomerated particles composed of agglomeration of a plurality of inorganic antibacterial particles.

**Brief Description of the Drawings**

Fig. 1 is an enlarged sectional view showing a part of inorganic antibacterial agent according to the present invention.

Fig. 2 is a diagram showing an observation system for inorganic antibacterial particles in the inorganic antibacterial agent.

Fig. 3 is a diagram showing a plane image of an inorganic antibacterial particle observed with the observation system illustrated in Fig. 2.

Fig. 4 is a diagram in which a plurality of domains are set on an image observed from the observed system illustrated in Fig. 2.

Fig. 5 is a sectional view showing an example of an inorganic antibacterial particle.

Fig. 6 is an enlarged sectional view showing a part of antibacterial molded resin product.

Fig. 7 is a table showing data on the manufacturing conditions of inorganic antibacterial agents and the inorganic antibacterial particles therein according to Examples 1 to 7 and Comparative Example 1.

Fig. 8 is a table showing the results of evaluation for antibacterial molded resin products according to Example 1 to 7 and Comparative Example 1.

**Best Modes for Carrying Out the Invention**

Hereinafter the present invention will be described for further details.

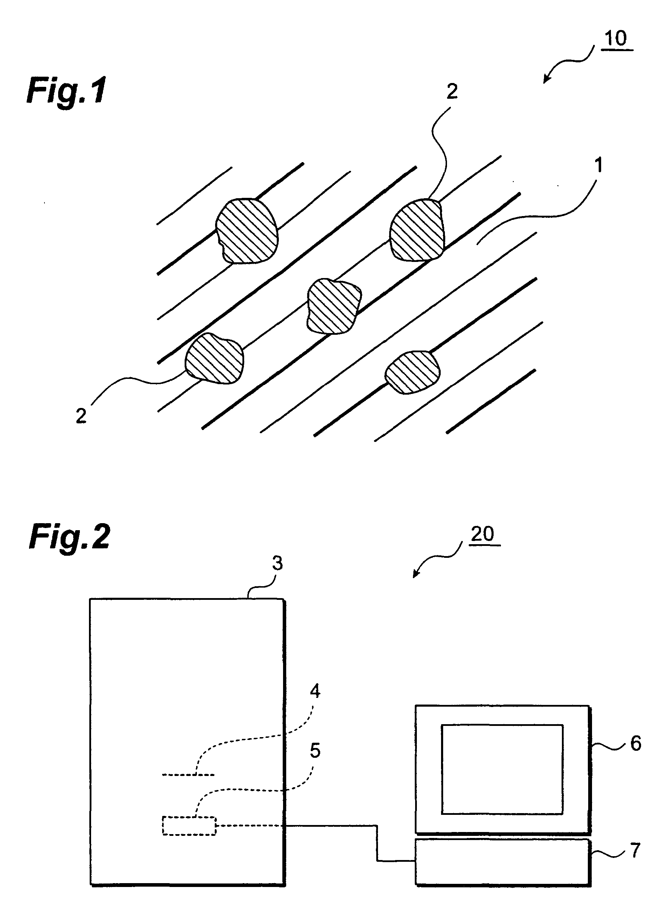

As shown in Fig. 1, the present invention provides an inorganic antibacterial agent 10 including thermoplastic resin 1 and inorganic antibacterial particles 2 dispersed in the resin 1 and satisfying any one of the following conditions (1) to (3) :

(1) The existing ratio of inorganic antibacterial particles having a shape factor SF2 not exceeding 200 is not less than 80%.

(2) The existing ratio of inorganic antibacterial particles having a particle diameter of not less than 2 μm is not more than 1%.

(3) The existing ratio of inorganic antibacterial particles per 1 μm$^2$ is not less than 70%.

The aforementioned conditions (1) to (3) are explained as follows;

The condition 1 is, as described above, that the existing ratio of inorganic antibacterial particles having the shape factor SF2 not exceeding 200 is not less than 80%.

A shape factor SF2 is definedby the following formula;

$$SF2 = 100 \, \pi \, L^2/(4A)$$

As shown in Fig. 2, inorganic antibacterial particles 2 are recognized when a slice 4 is observed using a transmission electron microscope 3 equipped in a observation system 20. Particularly, inorganic antibacterial particles 2 are displayed on a monitor screen 6 as a plane image through image analysis device 7 using CCD camera 5.

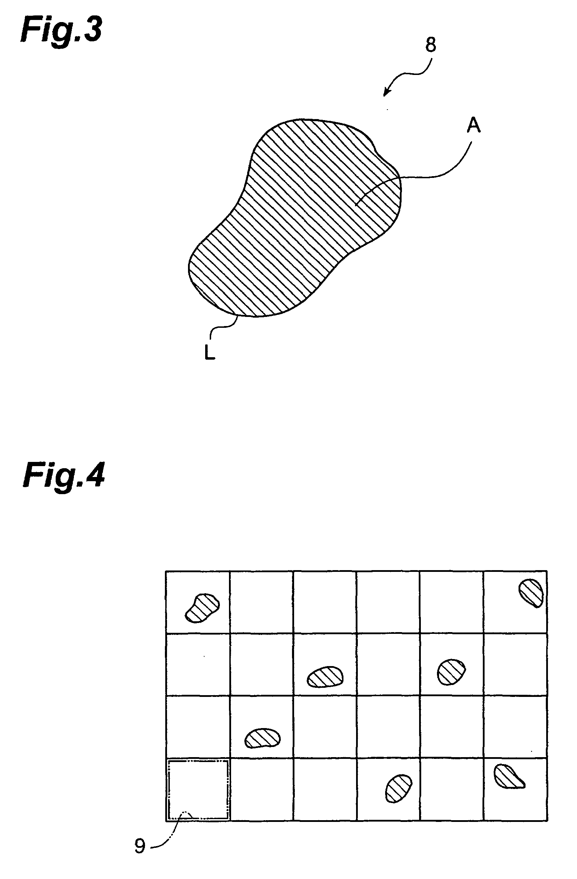

In the above formula, L represents a perimeter of the plane image 8 of the inorganic antibacterial particles 2 which are obtained from observation of a slice for inorganic antibacterial agent using a transmission electron microscope 3, and A represents an area of the plane image 8 for the inorganic antibacterial particles 2. (See, Fig. 3)

Generally speaking, the shape of agglomerated particles composed by a plurality of particles differ from that of an inorganic antibacterial particles and show complicated shape in combination with many inorganic antibacterial particles. As the result, a perimeter of a plane image of an agglomerated particles is longer than mono dispersed particle. When a plane image is a perfect circle, SF2 is 100. Generally, SF2 of amono dispersedpowder made by breaking up is less than 150. If SF2 of a powder exceeds 200, the powder should be composed of agglomerated particles. If the particles are present more than 20%, it is difficult for the inorganic antibacterial particles to express their activity corresponding to the added amount. This results in a significant decrease of antibacterial activity and mechanical strength. More amounts of inorganic antibacterial particles are required to keep their activity and may increase the manufacturing cost. Moreover, degradation of antibacterial molded resin products and abrasion of manufacturing equipment results from agglomerations of inorganic antibacterial particle. Consequently, it is necessary that the existing ratio of inorganic antibacterial particles having the shape factor SF2 not exceed 200 is not less than 80%. Preferably, not less than 90%. The existing ratio not less than 90% further improves antibacterial activity and products mechanical strength and reduces the manufacturing cost. Degradation of antibacterial molded resin products is less likely to occur and abrasion of manufacturing equipment is reduced.

As described above, inorganic antibacterial particles are recognized when any of the slices of inorganic antibacterial agent is observed. A perimeter and an area of plane images for inorganic antibacterial particles are measured using image analytical device (Nireco Corporation-made LUZEX III).

The existing ratio of inorganic antibacterial particles having the shape factor SF2 not exceeding 200 is calculated for each inorganic antibacterial particle using plane images of a transmission electron microscope and calculated by the following formula.

The formula is:

$$\text{Existing ratio (\%)} = 100 \times \text{(number of inorganic}$$

$$\text{antibacterial particles having SF2 not more than}$$

$$200)/\text{(total number of particles used for calculation of}$$

$$\text{SF2)}$$

This existing ratio can be calculated by use of the image analysis device described above. Note that in order to obtain a stable measurement value, the number of particles to be measured is at least 500, and that preferable number is more than 1000.

In the present invention, in addition to the fact that the existing ratio of inorganic antibacterial particles having SF2 which does not exceed 200 is not less than 80%, the existing ratio of inorganic antibacterial particles having SF2 in the range of 100 to 150 is preferably not less than 60%. The inorganic antibacterial particles having SF2 in the range of 100 to 150 have a few agglomerations and express antibacterial activity effectively. If the existing ratio of inorganic antibacterial particles is less than 60%, antibacterial activity cannot emerge effectively, and the manufacturing cost tends to increase. Note that preferably, the inorganic antibacterial particles having SF2 in the range of 100 to 150 is not less than 70%. More preferably, not less than 80%.

The condition (2) is, as described above, that the existing ratio of inorganic antibacterial particles having a particle diameter not less than 2 $\mu$m is not more than 1%.

The existing of inorganic antibacterial particles having aparticle diameter of not less than 2 $\mu$m is recognized by observation of a slice of inorganic antibacterial particles using a transmission electron microscope. The term "a diameter of inorganic antibacterial particle" refers to as a maximum diameter of an inorganic antibacterial particle. The maximum diameter can be calculated using image analysis device (Nireco Corporation-made LUZEX III). The existing ratio for inorganic antibacterial particles having a diameter of not less than 2 $\mu$m is calculated by the following formula.

The formula is,

The existing ratio of inorganic antibacterial particles having a particle diameter of not less than 2 $\mu$m (%) = 100 $\times$ (Number of the inorganic antibacterial particles having a particle diameter not less than 2 $\mu$m)/(Total number of inorganic antibacterial particles used for measurement of a particle diameter). In order to improve analysis accuracy, the number of particles for measuring a particle diameter is at least 500, and preferable number is more than 1000. If the number of the inorganic antibacterial particles for measuring a particle diameter is less than 500, the reliability of analysis for inorganic antibacterial particles may decrease because some inorganic antibacterial particles are sensitive to a local state of inorganic antibacterial agent.

If the existing ratio of inorganic antibacterial particles having a particle diameter of not less than 2 $\mu$m exceeds 1%, agglomeration and localization of inorganic antibacterial particles in base resin decreases the antibacterial activity and mechanical strength when inorganic antibacterial agent is dispersed in the base resin of antibacterial molded resin products. More amounts of inorganic antibacterial particles are required, leading to an increase of the manufacturing cost. Furthermore, agglomerations of inorganic antibacterial particles cause degradation of antibacterial molded resin products and abrasion of manufacturing equipment increases.

In addition to the condition that the existing ratio of inorganic antibacterial particles having a particle diameter of not less than 2 $\mu$m is not more than 1%, the existing ratio of inorganic antibacterial particles having the shape factor SF2 that does not exceed 200 is preferably not less than 80%. If the existing ratio is less than 80%, the antibacterial activity and the mechanical strength are decreased, and manufacturing cost tends to increase.

The condition (3) is, as described above, that when a slice of the inorganic antibacterial agent is observed by use of a transmission electron microscope, the existing ratio of inorganic antibacterial particles per 1 $\mu$m$^2$ is not less than 70%. The existing ratio of inorganic antibacterial particles per 1 $\mu$m$^2$ is calculated by image analysis device (Nireco Corporation-made LUZEX III). Particularly, as shown in Fig. 4, at least a plurality of domains 9 having an area of 1

$\mu m^2$ are set on the image, and measured the existence of inorganic antibacterial particles for each domain 9. The existing ratio of inorganic antibacterial particles per 1 $\mu m^2$ is calculated by the following formula;

Existing ratio (%) = 100 $\times$ (Number of domains in which inorganic antibacterial particles are present)/(Total number of domains in which presence of inorganic antibacterial particles is determined). If the inorganic antibacterial particles have the existing ratio of less than 70%, agglomeration of inorganic antibacterial particles in base resin fails to express decrease the antibacterial activity when inorganic antibacterial agent is dispersed in antibacterial molded resin products. More amounts of inorganic antibacterial particles are required, leading to an increase of the manufacturing cost. Furthermore, if the inorganic antibacterial agent having the existing ratio of less than 70% is used, agglomerations cause degradation of antibacterial molded resin products and abrasion of manufacturing equipment. Preferably, the existing ratio of inorganic antibacterial particles per 1 $\mu m^2$ is not less than 80%. More preferably, not less than 90%. The number of domains to be measured is at least 500 domains, not less than 1000 domains are preferred. for antibacterial molded resin product tends to increase.

In addition to the condition that the existing ratio of inorganic antibacterial particles per 1 $\mu m^2$ is not less than 70%, preferably the existing ratio of inorganic antibacterial particles having the shape factor SF2 that does not exceed 200 is not less than 80%. If the existing ratio is less than 80%, the antibacterial activity and the mechanical strength are decreased, and the manufacturing cost tends to increase. In addition, agglomeration of inorganic antibacterial particles causes degradation of the antibacterial molded resin products, and abrasion of manufacturing device for antibacterial molded resin product tends to increase.

In addition to the condition that the existing ratio of inorganic antibacterial particles per 1 $\mu m^2$ is not less than 70%, preferably the existing ratio of inorganic antibacterial particles having a particle diameter not less than 2 $\mu m$ is not more than 1% and the existing ratio of inorganic antibacterial particles having the shape factor SF2 that does not exceed 200 is not less than 80%. No agglomerations are presented and no extremely large particles also are presented. The antibacterial activity is demonstrated effectively without abrasion of manufacturing equipment or decrease of mechanical strength or properties of antibacterial molded resin products. Moreover, being the existing ratio of inorganic antibacterial particles per 1 $\mu m^2$ not less than 70%, inorganic antibacterial particles may dispersed homogeneously. This leads to stable and continued manufacturing for antibacterial molded resin products having identical antibacterial activity.

Regarding to the above mentioned inorganic antibacterial agent, the preferred volume average particle diameter of inorganic antibacterial particles ranges from 0.05 to 0.5 $\mu m$. If a volume average particle diameter is less than 0.05 $\mu m$, the particle is too small to handle with ease due to inorganic antibacterial particles stirred up. On the other hand, if volume average particle diameter is over 0.5 $\mu m$, the surface area per unit weight of carrier decreases. This requires more amounts of the agent due to the decrease of antibacterial metal carried by inorganic antibacterial particle so that resin properties or the like are affected.

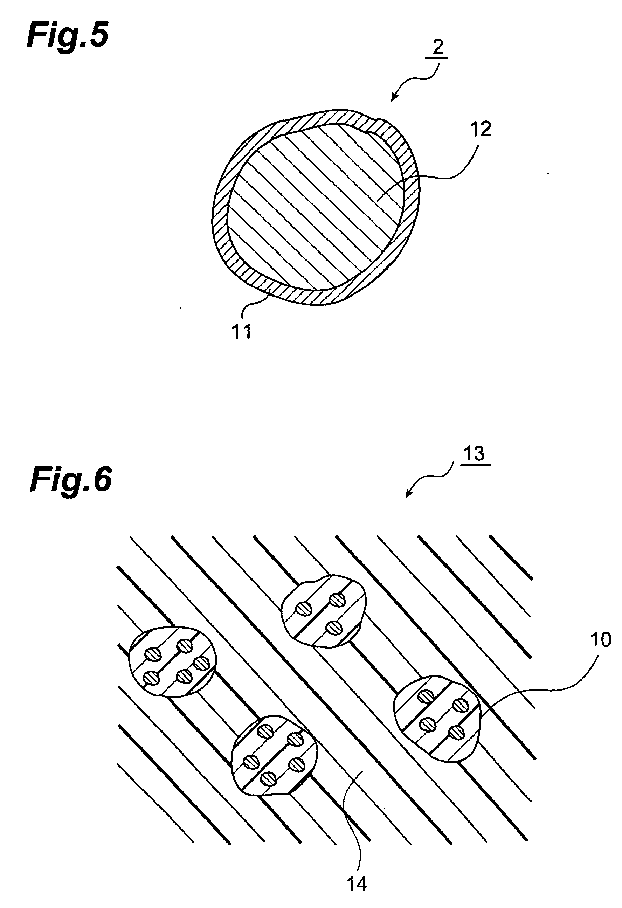

As illustrated in Fig. 5, an inorganic antibacterial particle preferably comprises metal having antibacterial activity (hereafter, refer to as antibacterial metal) 11 and inorganic carrier 12, but is not limited to, may comprise metal alone having antibacterial activity. When an inorganic antibacterial particle 2 comprises antibacterial metal 11 and inorganic carrier 12, the amount of metal dissolved is extremely small comparing to the use of antibacterial metal 11 or metal compounds thereof alone. This gives some advantages that antibacterial molded resin product can keep antibacterial activity constant, security high and almost be free from discoloration due to the sunlight.

The examples of the aforementioned antibacterial metal 11 typically include silver, copper, zinc, gold, platinum, nickel or the like. A kind of metal may be used as antibacterial metal, but two or more kind of metals may be used together.

When the aforementioned metals are used as antibacterial metal, the examples of inorganic carrier 12 include at least one ceramics such as alumina, silica, zeolite, phosphoric acid compounds, calcium carbonate, calcium silicate, bentonite or titanium oxide. These ceramics are safe for human body and have an advantage that they can firmly fix metal or metallic ion.

In general, silver, copper and zinc, as the antibacterial metals 11, are most preferred since they can keep high antibacterial activity and have some advantages in productivity and manufacturing cost. These antibacterial metals 11 may be used alone but some combinations of metals may be used. While phosphoric acid compounds, as the inorganic carrier 12, are more preferred since they have high ion exchange capacity and low solubility of the carried antibacterial metal 11.

Typical examples of the aforementioned phosphoric acid compounds include at least one compound selected from the group consisting of calcium phosphate compounds such as tricalcium phosphate[$Ca_3(PO_4)_2$], calcium hidrogenphospate [$CaHPO_4$], hydroxyapatite [$Ca_{10}(PO_4)_6(OH)_2$], calcium dihydrogenpyrophosphate [$CaH_2P_2O_7$], calcium pyrophosphate [$Ca_2P_2O_7$], titanium phosphate compound such as $Ti(HPO_4)_2$, zirconium phosphate compound such as $Zr(HPO_4)_2$, magnesium phosphate compounds such as $Mg_8(PO_4)_2$, aluminum phosphate compounds such as $AlPO_4$, manganese phosphate compounds such as $Mn_3(PO_4)_2$, iron phosphate compounds such as $Fe_8(PO_4)_2$. The inorganic antibacterial agents 2 carried by phosphoric acid compounds have low solubility (desorption) for metallic ion so that the durability of antibacterial effect is kept higher.

Note that the most referable compounds of the aforementioned phosphoric acid compounds are calcium phosphate compounds because they have high affinity to human body (bio-compatibility), high antibacterial durability and security. Except for the compounds mentioned above, alternative calcium phosphate compounds maybe halogenated apatite such as $Ca_{10}(PO_4)_6X_2$ (X=F, Cl) and nonstoichiometric apatite such as $Ca_{10-z}(HPO_4)_y(PO_4)_{6-y}X_{2-y} \cdot zH_2O$ (X=OH, F, Cl; y, z represent nonstoichiometric ratio).

In the present invention, a preferable inorganic antibacterial agent comprises a carrier selected from aforementioned compounds, preferably phosphoric acid compounds, particularly calcium phosphate compounds and aforementioned antibacterial metals, particularly at least a metal selected from the group consisting of silver and zinc, are carried on the carrier.

Inorganic antibacterial particles 2 are obtained by allowing the antibacterial metals 11 to be carried on inorganic carrier 12 using conventional methods. The conventional methods include physical adsorption, chemical adsorption, ion exchange, and vapor deposition, surface thin film formation and mechanical carrying method.

As far as a desirable antibacterial activity is given, the contents of inorganic antibacterial particles 2 in inorganic antibacterial agent has no limitation. Preferable contents range from 10% to 60% by weight. If the content of inorganic antibacterial particles 2 is less than 10% by weight, more amount of inorganic antibacterial agent is required to obtain a desirable antibacterial activity for base resin. This results in an increase of the manufacturing cost for antibacterial molded resin products. If the content of inorganic antibacterial particles exceed 60% by weight, the number of agglomerations of inorganic antibacterial particle is likely to occur and the kneading operation in manufacturing of inorganic antibacterial agent inclines to be difficult.

In the present invention, the thermoplastic resin has no particular limitations. Examples of the thermoplastic resin include polyester, polyamide, epoxy, silicone resin, fluoro resin, polystyrene resin family, acrylic resin family, methacrylic resin family, olefinic resin family and derivative of these resins. Considering the easiness of mixing, dipersability and versatility for inorganic antibacterial particles, preferable resins are polyester, polyamide, polystyrene resin family, acrylic resin family, methacrylic resin family and olefinic resin family. These resins may be used alone or used as a combination at least more than one resin.

Examples of polyester include polyethyleneterephthalate, polybutyleneterephthalate, poly(ethyleneterephthalate/isophthalate), poly(ehylene glycol/cyclohxane dimethanol/terephthalate), plycarbonate and polyarylate.

Examples of polyamides include nylon 4, nylon 6, nylon12, nylon 66 and nylon 610.

Examples of polystyrene family include polystyrene and polychlorostyrene.

Examples of acrylic resins are polymethylacrylate, poly ethylacrylate, polybutylacrylate, polydodecylacrylate, polyoctylacrylate and polyphenylacrylate.

Examples of methacrylic resins are poly(methylmetacrylate), poly(ethylmethacrylate), poly(butylmethacrylate) and poly(dodecylmetacrylate).

Examples of olefinic resins are polyethylene and polypropylene.

In the present invention, if necessary, inorganic antibacterial agent may comprise one or a combination of a plurality of known adjuncts without affecting the antibacterial activity. Examples of adjuncts include flame retarder, flame retarder assistant, antiseptics, antimold, antioxidant, UV-absorber, mold lubricant, plasticizer, surfactant, colorant (dye or pigment), dispersant, slipping agent, dispersant assistant, filler, binding agent and antistatic agent. However, the inorganic antibacterial agent of the present invention not always requires slipping agent, dispersant and dispersant assistant which are generally utilized to improve the compatibility between base resin and inorganic antibacterial particles.

In the present invention, considering the characteristics of thermoplastics resin and inorganic antibacterial particles, inorganic antibacterial agent is prepared by melting-kneading-grinding method with controlling various parameters. The inorganic antibacterial agent of the present invention is prepared by the method comprising melting-kneading process in which inorganic antibacterial particles are dispersed into melted thermoplastic resin and grinding process in which the kneaded material prepared in the melting-kneading process is crushed.

There are no limitations for thermoplastics and inorganic antibacterial particles used in the present invention. However, those two materials are selected in consideration of glass transition temperature relating to the easiness of crushing, softening temperature, melting point, acid value relating to the compatibility with base particles (which composes fiber or molded product), hydroxyl value, functional group, dissolving rate, physical properties such as a particle diameter and particle size distribution. For example, when the acid value of a thermoplastic resin is low, the inorganic antibacterial agent is prone to imperfect dispersion. When the acid value is high, it is prone to discoloration and insufficient compatibility with base resin. In such case, in order to improve the dispersion of inorganic antibacterial particles, the optimization of mixing-kneading machine is required and the selection of proper inorganic antibacterial particles is needed.

In the aforementioned melting-kneading-grinding process, inorganic antibacterial particles are kneaded with melted thermoplastic resins using the conventional methods. Preferably, kneading machines, which may have uniaxial or multi-axial, are used to obtain well-dispersed inorganic antibacterial particles in thermoplastic resins. In this stage, kneading parameters such as a number of kneading screw zones, a temperature of the cylinder of the machine, the rate of kneading significantly affects the properties of inorganic antibacterial agents to be prepared. It is required that all those parameters should be set properly and controlled. For example, according to properties of thermoplastic resins, a control system should be equipped so as to keep a resin temperature properly. The number of kneading screw zones and preset cylinder temperature should be comprehensively determined to obtain well-kneaded particles. The machine having multi numbers of kneading screw zones can give well dispersed particles effectively, for example, a machine having two zone are more effective than a machine having a single zone. A cylinder temperature is set depending on a softening temperature of the resin used. Typically it should be preferably set in the range lower than 20°C and higher than 100°C from the softening temperature of the resin. If the temperature is lower than this range, it is difficult to get perfect dispersion resulting in agglomerations of particles. If the temperature is higher than this range, it is not only difficult to apply pressure or force required for kneading to the resin resulting in insufficient dispersion of particles, but also difficult to cool after kneading.

In the aforementioned crushing process, the melted-kneaded products are crushed after being thoroughly cooled using the conventional mechanical crushing methods such as a ball mill, sand mill or hammer mill or pneumatic methods. If normal cooling methods are insufficient, cooling or freeze grinding can be used. Considering the properties of ground material as inorganic antibacterial agent, proper method for cooling and grinding should be selected and parameters such as cooling rate, grinding pressure, grinding temperature and air flow rate should be optimized.

Note that in the manufacturing process of the present invention, preferably a premixing process, in which thermoplastic resin and inorganic antibacterial particles are stirred and mixed, is performed prior to the melting-kneading-grinding process. Without a premixing process, inorganic antibacterial particles are prone to localize and agglomerate due to the insufficient mixing. Thermoplastic resin and inorganic antibacterial particles are premixed by using Henschel mixer or super mixer. The operation properties such as capacity of the mixer, rotational speed of the impeller of the mixer and mixing time are preferably selected. An example of preferable rotational speed of the impeller is not less than 500 rpm for Henschel mixer having 75 litters of capacity. If the rotational speed is less than this rate, it takes a long time for enough mixing and leads to inefficient work. The maximum rotational speed depends on the performance of machines, mixing time and properties of resins. The preferable mixing time, which depends on rotation speed of the machine, ranges from 15 seconds to 15 minutes. If the mixing time is too short inorganic antibacterial particles are prone to be localized and agglomerated due to the insufficient mixing. On the other hand, if themixing time is longer than 15 minutes, no mixing improvement but re-separation is expected. Moreover, a temperature rise can cause agglomerations.

Next, the manufacturing method of antibacterial molded resin products of the present invention will be illustrated below.

As shown in Fig. 6, the antibacterial molded resin products 13 comprise inorganic antibacterial agent 10, which satisfies any one of the aforementioned conditions (1) to (3), and base resin 14 which allows the inorganic antibacterial agent to be dispersed. This inorganic antibacterial agent 10 comprises inorganic antibacterial particles 2 which are well prevented from agglomerations and localizations in thermoplastic resin 2 so that agglomerations and localizations of inorganic antibacterial particles 2 are also well prevented even in antibacterial molded resin products 13. This leads to a sufficient improvement of antibacterial activity and mechanical strength of the antibacterial molded resin products 13. The manufacturing cost is also reduced since the minimum amount of the inorganic antibacterial agent in base resin is required to express a certain level of antibacterial activity. This leads to the reduction of manufacturing cost. Furthermore, the degradation of antibacterial molded resin products is suppressed and the abrasion of manufacturing equipment of antibacterial molded resin products is also reduced.

There are no specific limitations on the base resin 14. The selection of the resin depends on applications. Especially preferred resin is thermoplastic resin. Examples of thermoplastic resins include polystyrene resin family; metacrylic resin family; olefin resin family such as polyethylene and polypropylene; polyvinylchloride resin family; polyamide resin; polyester resin; polyurethane, polycarbonate, fluororesinorthelike. Among these resins, particularly preferred resins are polystyrene resin family, acrylic resin family, methacrylic resin family and olefin resin family.

Examples of polystyrene resin family include polystyrene and polychlorostyrene.

Examples of acrylic resin family include polymethylacrylate, polyethylacrylate, polybutylacrylate, polydodecylacrylate, polyoctylacrylate and polyphenylacrylate. Examples of methacrylic resin family include poly(methylmetacrylate), poly(ethylmethacrylate), poly(butylmethacrylate) and poly(dodecylmetacrylate).

Examples of olefin resin family include polyethylene and polypropylene.

A content of inorganic antibacterial agent 10 in molded product 13 depends on the amount of inorganic antibacterial particles ontained in an inorganic antibacterial agent 10. Usually, the concentration of inorganic antibacterial particles 2 in base resin 14 for molded products ranges from 0.01% by weight to 30% by weight, preferably, from 0.05% by weight to 20% by weight. When the amount of inorganic antibacterial particles 2 is less than 0.01% by weight in base resin 14, antibacterial activity cannot be expressed. When the amount more than 30% by weight, no improvement of the antibacterial activity is noted. In order to obtain the maximum antibacterial activity with minimum cost, the preferable amount ranges 0.01% by weight to 30% by weight.

The aforementioned antibacterial molded resin product may be manufactured by a method including a process which allows an inorganic antibacterial agent 10 to be dispersed in a base resin 14, wherein the inorganic antibacterial agent 10 includes a thermoplastic resin and an inorganic antibacterial particle dispersed in a thermoplastic resin and satisfies any one of the following conditions (1) to (3). This process specifically includes a kneading process that mixed and melted base resin and inorganic antibacterial agent to provide kneaded material, and a molding process that gives shape to the kneaded material.

Using this process, antibacterial molded resin products having sufficient antibacterial activity and mechanical strength are obtained. The inorganic antibacterial agent which comprises inorganic antibacterial particles sufficiently prevented from agglomeration and localization is dispersed in melted base resin. The manufacturing cost is also reduced since the minimum amount of the inorganic antibacterial agent in base resin is required to express a certain level of antibacterial activity. Furthermore, according to the present process, the inorganic antibacterial agent can well keep the properties and texture of the base resin without addition of dispersing or slipping agent in the manufacturing process of antibacterial molded resin products. When inorganic antibacterial agent and base resin are kneaded or molded, clogging of filters and abrasion of equipment, at which base resin contacts, in melting-kneading machine or molder can be thoroughly prevented since agglomeration or localization of inorganic antibacterial particles is sufficiently prevented.

An example of the method for the aforementionedmolding process is extrusion. However, the present invention is not limited to this extrusion, and injection molding, blow molding, inflation molding and vacuum molding may be used.

Next, manufacturing method for antibacterial fiber (fibrous antibacterial molded resin products) as an embodiment of the aforementioned antibacterial molded resin product will be explained.

The antibacterial fiber provided by the method of the present invention comprises inorganic antibacterial agent 10, which satisfies any one of the aforementioned conditions (1) to (3), and base resin 14 in which the inorganic antibacterial agent is dispersed. This inorganic antibacterial agent 10 comprises inorganic antibacterial particles 2 which are well prevented from agglomeration and localization in thermoplastic resin 2 so that agglomeration and localization of inorganic antibacterial particles 2 are also well prevented even in antibacterial fiber. This leads to a sufficient improvement of antibacterial activity and mechanical strength. The manufacturing cost is also reduced since the minimum amount of the inorganic antibacterial agent in base resin is required to express a certain level of antibacterial activity. Furthermore, the degradation of antibacterial molded resin products is suppressed and the abrasion of manufacturing equipment of antibacterial fibers is also reduced.

There are no specific limitations on the aforementioned base resin 14, when the aforementioned inorganic antibacterial agent 10 is mixed with the base resin 14. Examples include polyamide such as nylon 6 or nylon 66, polyester such as polyethyleneterephtarate and polybutyleneterephtharate, polyolefin such as polyethylene and polypropylene, synthetic resins such as polyacrylnitrile, polyvinylalcohol and co-polymer thereof, semi-synthetic resins such as acetate and promix, regenerated resins such as rayon or cupra.

A content of inorganic antibacterial agent 10 in base resin 14 depends on the amount of inorganic particles 2 included in an inorganic antibacterial agent 10. Usually, the concentration of inorganic antibacterial particles 2 in base resin 14 ranges from 0.01% by weight to 20% by weight, preferably, from 0.01% by weight to 10% by weight. Inorganic antibacterial agent is mixed with polymer for fiber resin, polymer pellet or spinning solution using the conventional methods and then the mixture is changed into fiber. If the amount of inorganic antibacterial particles is less than 0.01% by weight in fibrous base resin, antibacterial activity cannot be expressed. If the amount over 20% by weight is compounded, no improvement of the antibacterial activity is found. Therefore, in order to obtain the maximum antibacterial activity with minimum cost, the preferable amount ranges from 0.01% by weight to 20% by weight.

The aforementioned antibacterial fiber may be manufactured by the method comprising a melting process which allows base resin and inorganic antibacterial agent to be melted and a spinning process which spins the melted material obtained in the melting process. Here, inorganic antibacterial agent satisfying any one of the aforementioned conditions (1) to (3) is used.

Using this manufacturing method, antibacterial fiber having sufficient antibacterial activity and mechanical strength can be obtained. Since inorganic antibacterial particles, which are free from agglomerations or localizations, are dispersed in melted base resin and expresses constant antibacterial activity, no necessary amount of inorganic antibacterial agent in base resin is required. This leads to the reduction of manufacturing cost. Furthermore, according to the present manufacturing method, the inorganic antibacterial agent can well keep the properties and texture of the base resin without addition of dispersing or slipping agent in the manufacturing process of antibacterial fiber. When inorganic antibacterial agent and base resin are melted, clogging of filters and abrasion of melt spinning equipment where the base resin contacts can be thoroughly prevented.

Examples

Hereinafter, the present invention will be described according to Examples and Comparative Examples in more detail.

Examples 1 to 3 and Examples 5 to 7

First, an inorganic antibacterial agent was prepared using the following kneading and grinding method.

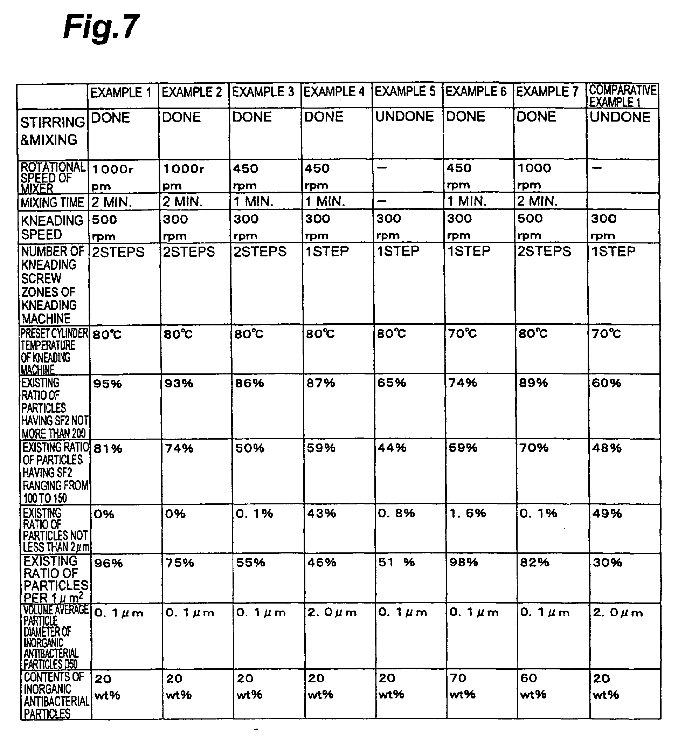

Aromatic polyester (condensate of terephthalic acid and bisphenol A adduct 2 mols of polyoxyethylene) having Mw=22000 of weight average molecular weight, 65°C of glass transition temperature as thermoplastic resin and calcium phosphate particles (Sangi Co., Ltd.-made Apasider Z,.) carrying silver particles of volume average particle diameter D50=0.1 μm, as an inorganic antibacterial particles were used to charge into a Henschel mixer (Mitsui Miike Co., Ltd.-made Type FM-75) and mixed by stirring. Fig. 7 shows the weight ratio of inorganic antibacterial particles to polyester and operating parameters of a mixer (with or without mixing, rotational speed and stirring time). Then, the mixture of the aforementioned inorganic antibacterial particles and polyester was melted and kneaded using an extruder (Toshiba Machine Co., Ltd.-made TEM48BS,.,). The kneaded material was cooled and crushed with a hammer mill. In this way, an inorganic antibacterial agent was obtained. Note that the operation conditions such as the kneading speed at melting and kneading, the number of kneading screw zones and the preset cylinder temperature were set to the values shown in Fig. 7.

For the characteristics of the inorganic antibacterial agent thus prepared, the existing ratio of the inorganic antibacterial particles having the shape factor SF2 of not more than 200, the existing ratio of inorganic antibacterial particles having the shape factor SF2 ranging from 100 to 150, the existing ratio of inorganic antibacterial particles having the particle diameter of not less than 2 μm and the existing ratio of inorganic antibacterial particles per 1 μm$^2$ were measured as follows;

The existing ratio of the inorganic antibacterial particles having the shape factor SF2 of not more than 200;

Inorganic antibacterial agent was observed using a transmission electron microscope of magnification of 5000 times. The observed images were captured by image analysis device (Nireco Corporation-made LUUZEX III). The shape factor SF2s was measured for each 1000 inorganic antibacterial particle using an image analysis program and calculated the aforementioned existing ratio. The existing ratio of inorganic antibacterial particles having the shape factor SF2 ranging from 100 to 150 were obtained by the same procedure.

The existing ratio of inorganic antibacterial particles having the particle diameter of not less than 2 μm;

Inorganic antibacterial agent was observed using a transmission electron microscope of magnification of 3000 times. The observed images were captured by image processing device (Nireco Corporation-made LUUZEX III). The longest diameters were measured for each 1000 particle using an image analysis program and the aforementioned existing ratio was calculated.

The existing ratio of inorganic antibacterial particles per 1 μm$^2$;

Inorganic antibacterial agent was observed using a transmission electron microscope of magnification of 3000 times. The observed images were capturedby imageprocessing device (Nireco Corporation-made LUUZEX III). The number of domains was set to be 1 μm$^2$ for each domain and the presence of the inorganic antibacterial particles were observed for each 1000 domain using an image analysis program and the aforementioned existing ratio was calculated.

Next, the antibacterial molded resin products including the inorganic antibacterial agent used in Examples 1 to 7 and Comparative Example 1 were prepared as follows;

2.5% by weight of each of the inorganic antibacterial agent was added to polyester resin for base resin and an antibacterial plate was obtained using an extrusion machine in a melting and kneading process.

5% by weight of each of the inorganic antibacterial agent was added to poly(ethyleneterephthalate) which is base resin for fiber use and the melted material was spun by the conventional melting spinning method at take-up speed of 1200 m/min, and then antibacterial textured yarn was obtained using a spindle type drawing-texturing machine.

(1) Antibacterial Test

The antibacterial test was carried out for antibacterial resin plates and antibacterial textured yarn as follows;

(1) Antibacterial resin plates

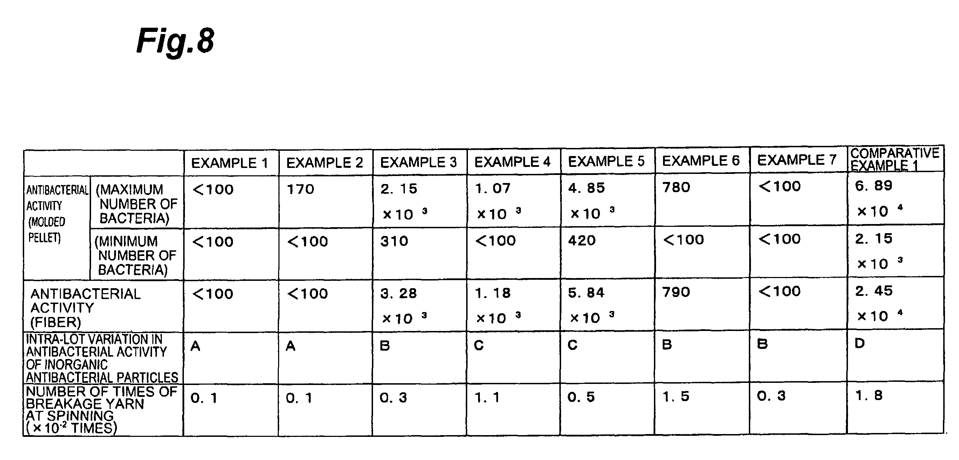

Antibacterial test was implemented in accordance with the procedure analogous to JIS Z 2801 "Antibacterial products-Test for antibacterial activity and efficiency" compiled through the deliverations of Japanese Industrial Standards Committee. First, the molded resin plate (thickness=2 mm), was cut to 50 mm X 50 mm size of pieces and then the surfaces were wiped off with ethanol moistened gauze and the pieces were let stand at 23°C, 60% relative humidity for 24 hours as slices for the antibacterial test. A bacterium liquid of 0.5 ml was inoculated on the slice with which 45 mm X 45 mm of polyethylene film was closely contacted. The slice was stored at 37°C and then survived bacterium was washed out using SCDLP medium (Nihon Pharmaceutical Co., Ltd.) at the beginning of storage and after 24 hours of storage. This washed out liquid was determined the number of the survived bacterium by ager-plate incubation test (at 37°C, for 24 hours) using standard agar medium for counting bacteria (Nissui Co., Ltd). The resultant number was converted to the survived bacteria per slice. The results are shown in Fig. 8.

Escherichia coli (ISO3301) was used as test bacterium. In order to prepare a test bacterium liquid, 5 mg of meat extract, 10 mg of peptone and 5 mg of sodium chloride were dissolved in one litter of distilled water to prepare a usual bouilon medium. Then, the bouilon medium was diluted with distilled water of one liter to prepare a solution having 500-fold dilution factor. Escherichia coli were suspended in this solution to adjust to be the number of Escherichia Coli of 1 X 105 per 1 ml of the solution.

Note that in order to detect the variation of the value of antibacterial activity on antibacterial resin plates, 10 kinds for each test plate were prepared for the slice of Examples 1 to 7 and Comparative Example 1. The variation was evaluated by comparing the results of antibacterial test for each test plate in the examples to each other as follows,

"The variation of antibacterial activity" = log (the maximum value of the number of surved bacteria) - log (the minimum value of the number of survived bacteria)

The variation of quality for each Example was evaluated using the value of "the variation of antibacterial activity" described above. The results are shown in Fig. 8.

A: "The variation of antibacterial activity" ≦ 0.5 : No variation in quality.
B:0.5<"The variation of antibacterial activity" ≦ 1.0 : Detectable variation in quality.
C:1.0<"The variation of antibacterial activity" ≦ 1.5 : Variation in quality present.
D:1.5<"The variation of antibacterial activity" : Much variation present.

The results are shown in Fig. 8.

(2) Antibacterial textured yarn

Antibacterial test was implemented in accordance with the procedure analogous to JIS L 1902 "Testing method for antibacterial activity of textile" compiled through the deliverations of the Japanese Industrial Standards Committee.

Specifically, sterilized nutrient broth diluted to 1/20 concentration in which 1.3 X 105 pieces/m of the test bacterium described below were dissolved was inoculated on the slice 0.4 g and incubated at 37°C for 18 hours. After the completion of incubation, the test bacterium was washed out and then a pour plate medium of agar was prepared using the solution thereof. After incubation of the medium for 24 to 48 hours at 37°C, the number of bacteria was measured. The results were shown in Fig. 8. Note that staphylococcus aureus ATCC 6538P was used as the test bacterium.

(2) The number of times of breakage of yarn at spinning The number of times of breakage of yarn at spinning was expressed as the number of times of breakage per 106 m of yarn at a take-up speed of 1200 m/min. The results are shown in Fig. 8.

Example 4

Inorganic antibacterial particles were prepared in the same way as Example 1 except that inorganic antibacterial particles were replaced with the particles having average volume particle diameter of D50=2.0 μm (Ishizuka Glass Co., Ltd.-made Borosilicateglass-silver family of antibacterial agent; Ionpure) and operation parameters such as with or without mixing, rotational speed of a mixer blade, mixing time, kneading speed at melting and kneading, the number of kneading screw zones and the preset cylinder temperature were set to the values shown in Fig. 7. Then, for the characteristics of the inorganic antibacterial agent, the existing ratio of the inorganic antibacterial particles having the shape factor SF2 not more than 200, the existing ratio of inorganic antibacterial particles having the shape factor SF2 ranging from 100 to 150, the existing ratio of inorganic antibacterial particles having the particle diameter not less than 2 μm and the existing ratio of inorganic antibacterial particles per 1 μm$^2$, were measured in the same way as Example 1. Results are shown in Fig. 8.

Antibacterial molded resin products and antibacterial fiber were prepared with the inorganic antibacterial agents obtained described above in the same way as Example 1. Then, antibacterial activity, variation of antibacterial activity, and mechanical strength were measured and evaluated in the same way as Example 1. Results were shown in Fig. 8.

Comparative example 1

Inorganic antibacterial particles were prepared in the same way as Example 1 except that inorganic antibacterial particles were replaced with the particles having average volume particle diameter of D50=2.0 μm (Ishizuka glass Co., Ltd.-made Borosilicateglass-silver family of antibacterial agent; Ionpure) and operation parameters such as with or without mixing, rotational speed of a mixer blade and mixing time, kneading speed of a mixer blade at melting and kneading, the number of kneading screw zones and the preset cylinder temperature were set to the values shown in Fig. 7. Then, for the characteristics of the inorganic antibacterial agent, the existing ratio of the inorganic antibacterial particles having the shape factor SF2 not more than 200, the existing ratio of inorganic antibacterial particles having the shape factor SF2 ranging from 100 to 150, the existing ratio of inorganic antibacterial particles having the particle diameter not less than 2 μm and the existing ratio of inorganic antibacterial particles per 1 μm$^2$, were measured in the same way as Example1. Results are shown in Fig. 8.

Antibacterial molded resin products and antibacterial fiber were prepared with the inorganic antibacterial agents obtained above in the same way as Example 1. Then, antibacterial activity, variation of antibacterial activity, and mechanical strength were measured and evaluate in the same way as Example 1. Results were shown in Fig. 8.

From the results according to the results of Examples 1 to 7 and Comparative Example 1, it is found out that the antibacterial molded resin products and antibacterial fiber prepared in Example 1 to 7 express sufficiently high antibacterial activity, a small range of variation for antibacterial activity and high mechanical strength comparing to Comparative example 1. The results of Comparative Example express insufficient antibacterial activity, a larger range of variation for antibacterial activity and lower mechanical strength.

**Industrial Applicability**

As described above, the inorganic antibacterial agent of the present invention comprises inorganic antibacterial particles dispersed in thermoplastic resin. When the inorganic antibacterial agent is dispersed in base resin of antibacterial molded resin products, the dispersion of the inorganic antibacterial agent is improved. Furthermore, inorganic antibacterial particles of the agent are dispersed homogeneously in the base resin because the occurrence of agglomeration and localization of the inorganic antibacterial particles in thermoplastic resin is thoroughly prevented. This improves antibacterial activity and mechanical strength of antibacterial molded resin products sufficiently. Moreover, the manufacturing cost is also reduced since the minimum amount of the inorganic antibacterial agent in base resin is required to express a certain level of antibacterial activity. In addition, the degradation of antibacterial molded resin products is suppressed and the abrasion of manufacturing equipment of antibacterial molded resin products is also reduced.

The method for manufacturing antibacterial molded resin products of the present invention is capable of preventing inorganic antibacterial particles from the occurrence of agglomeration and localization in base resin, since the inorganic antibacterial agent, in which inorganic antibacterial particles are well-prevented from the occurrence of agglomeration and localization, is dispersed in antibacterial molded resin products. This improves antibacterial activity and mechanical strength of the antibacterial molded resin products sufficiently.

Still furthermore, the antibacterial molded resin products of the present invention well disperse inorganic antibacterial particles in the base resin since the inorganic antibacterial particles are dispersed in a thermoplastic resin having good compatibility with the base resin. In addition, inorganic antibacterial particles of the agent are dispersed homogeneously in the base resin because the occurrence of agglomeration and localization of the inorganic antibacterial particles in thermoplastic resin are thoroughly prevented. This improves antibacterial activity and mechanical strength of the antibacterial molded resin products sufficiently. Furthermore, the manufacturing cost is also reduced since the minimum amount of the inorganic antibacterial agent in base resin is required to express a certain level of antibacterial activity. The degradation of antibacterial molded resin products is also suppressed and the abrasion of manufacturing equipment of antibacterial molded resin products is also reduced.

**Claims**

1. An inorganic antibacterial agent comprising a thermoplastic resin and inorganic antibacterial particles, wherein the inorganic antibacterial particles are dispersed in the resin, said inorganic antibacterial agent satisfying any one of the following conditions (1) to (3):

    (1) An existing ratio of the inorganic antibacterial particles, which is calculated by the following formula, is not less than 80%.
    The formula is:

$$\text{Existing ratio (\%)} = 100\times \text{(Number of the inorganic}$$

$$\text{antibacterial particles having SF2 of not more than 200) / (a}$$

$$\text{total number of the inorganic antibacterial particles used}$$

$$\text{for calculating SF2)}$$

Wherein SF2 is a shape factor defined by the following formula;

$$SF2 = 100\,\pi\,L^2/(4A)$$

(Wherein L represents a perimeter of a plane image of the inorganic antibacterial particle, and A represents an area of the plane image of the inorganic antibacterial particle, said L and A obtained by observing a slice of the inorganic antibacterial agent using a transmission electron microscope.)
(2) An existing ratio of the inorganic antibacterial particles having a particle diameter of not less than 2 $\mu$m, which is calculated by the following formula, is not more than 1%.
The formula is:

$$\text{Existing ratio (\%)} = 100\times \text{(number of the inorganic}$$

$$\text{antibacterial particles having a diameter of not less than}$$

$$2\,\mu\text{m)/(a total number of the inorganic antibacterial}$$

$$\text{particles used for measuring the particle diameter)}$$

(3) An existing ratio of the inorganic antibacterial particles per 1 $\mu$m$^2$ is not less than 70%, wherein the existing ratio is calculated by the following formula, and is obtained by observing a slice of the inorganic antibacterial agent using a transmission electron microscope.
The formula is:

$$\text{Existing ratio (\%)} = 100\times \text{(Number of domains in which}$$

$$\text{the inorganic antibacterial particles are present)/(a}$$

$$\text{total number of domains which is observed if the inorganic}$$

$$\text{antibacterial particles are present or not).}$$

2. The inorganic antibacterial agent according to claim 1, wherein the existing ratio of the inorganic antibacterial particles having the shape factor SF2 in a range of from 100 to 150 is not less than 60% when satisfying the condition (1) of claim 1.

3. The inorganic antibacterial agent according to claim 1, wherein the existing ratio of the inorganic antibacterial particles having the shape factor SF2 of not more than 200 is not less than 80% when satisfying the condition (2) of claim 1.

4. The inorganic antibacterial agent according to claim 1, wherein the existing ratio of the inorganic antibacterial particles having the shape factor SF2 of not more than 200 is not less than 80% when satisfying the condition (3) of claim 1.

5. The inorganic antibacterial agent according to claim 1, wherein a volume average particle diameter of the inorganic antibacterial particles ranges from 0.05 to 0.5 $\mu$m.

EP 1 442 659 A1

**6.** The inorganic antibacterial agent according to claim 1, wherein the inorganic antibacterial particles comprise a metal and an inorganic carrier, saidmetal having an antibacterial activity and including at least one kind which is selected from silver, copper, zinc, gold, platinum and nickel, said inorganic carrier including at least one kind which is selected from alumina, silica, zeolite, phosphoric acid compound group, calcium carbonate, calcium silicate, bentonite and titanium oxide.

**7.** The inorganic antibacterial agent according to claim 1, wherein the inorganic antibacterial particles comprise calcium phosphate carrying at least one metal selected from silver and zinc.

**8.** The inorganic antibacterial agent according to claim 1, wherein the thermoplastic resin including at least one kind which is selected from polyester, polyamide, polyolefin, acrylic resin family, methacrylic resin family and polystyrene resin family.

**9.** The inorganic antibacterial agent according to claim 1, wherein the inorganic antibacterial particles have a content which ranges from 10% by weight to 60% by weight.

**10.** A method of making an antibacterial molded resin product comprising a process of dispersing an inorganic antibacterial agent in a base resin, wherein the inorganic antibacterial agent includes a thermoplastic resin and inorganic antibacterial particles dispersed in the thermoplastic resin, said inorganic antibacterial agent satisfying any one of the following conditions (1) to (3) :

(1) An existing ratio of the inorganic antibacterial particles, which is calculated by the following formula, is not less than 80%.
The formula is:

Existing ratio (%) = 100× (Number of the inorganic

antibacterial particles having SF2 of not more than 200)/(a

total number of the inorganic antibacterial particles used

for calculating SF2)

Wherein SF2 is a shape factor defined by the following formula;

$$SF2 = 100\,\pi\,L^2/(4A)$$

(Wherein L represents a perimeter of a plane image of the inorganic antibacterial particle, and A represents an area of the plane image of the inorganic antibacterial particle, said L and A obtained by observing a slice of the inorganic antibacterial agent using a transmission electron microscope.)
(2) An existing ratio of the inorganic antibacterial particles having a particle diameter of not less than 2 $\mu$m, which is calculated by the following formula, is not more than 1%.
The formula is:

Existing ratio (%) = 100× (number of the inorganic

antibacterial particles having a diameter of not less than

2 $\mu$m)/(a total number of the inorganic antibacterial

particles used for measuring the particle diameter)

(3) An existing ratio of the inorganic antibacterial particles per 1 $\mu$m$^2$ is not less than 70%, wherein the existing ratio is calculatedby the following formula, and is obtained by observing a slice of the inorganic antibacterial agent using a transmission electron microscope.

16

The formula is:

$$\text{Existing ratio (\%)} = 100 \times \text{(Number of domains in which the}$$

$$\text{inorganic antibacterial particles are present)/(a total}$$

$$\text{number of domains which is observed if the inorganic}$$

$$\text{antibacterial particles are present or not).}$$

11. The method of making an antibacterial molded resin product according to claim 10, wherein the process comprises a kneading process to obtain a kneaded material by melting and kneading the inorganic antibacterial agent and the base resin to disperse the inorganic antibacterial agent in the base resin and a molding process to obtain the antibacterial molded resin product by molding the kneaded material.

12. The method of making an antibacterial molded resin product according to claim 11, wherein the inorganic antibacterial agent and the base resin are melted and kneaded in the kneading process so that the inorganic antibacterial particles have a concentration in the base resin of from 0.01% by weight to 30% by weight.

13. The method of making an antibacterial molded resin product according to claim 10, wherein the base resin is for fiber use and the antibacterial molded resin product is a fibrous antibacterial molded resin product.

14. The method of making an antibacterial molded resin product according to claim 10, wherein the process comprises a melting process to obtain a melted material by melting the base resin and the inorganic antibacterial agent, and a spinning process to spin the melted material.

15. The method of making an antibacterial molded resin product according to claim 12, wherein the inorganic antibacterial agent and thebase resin aremelted and kneaded in the melting process so that the inorganic antibacterial particles have a concentration in the inorganic antibacterial agent of from 0.01% by weight to 20% by weight to the base resin.

16. An antibacterial molded resin product comprising an inorganic antibacterial agent and a basic resin, wherein the inorganic antibacterial agent is dispersed in the basic resin, said inorganic antibacterial agent including a thermoplastic resin and inorganic antibacterial particles, wherein the inorganic antibacterial particles are dispersed in the thermoplastic resin, said inorganic antibacterial agent satisfying any one of the following conditions (1) to (3):

(1) An existing ratio of the inorganic antibacterial particles, which is calculated by the following formula, is not less than 80%.
The formula is:

$$\text{Existing ratio (\%)} = 100 \times \text{(Number of the inorganic}$$

$$\text{antibacterial particles having SF2 of not more than 200) / (a}$$

$$\text{total number of the inorganic antibacterial particles used}$$

$$\text{for calculating SF2)}$$

Wherein SF2 is a shape factor defined by the following formula;

$$\text{SF2} = 100 \, \pi \, L^2/(4A)$$

(Wherein L represents a perimeter of a plane image of the inorganic antibacterial particle, and A represents an area of the plane image of the inorganic antibacterial particle, said L and A obtained by observing a slice of the inorganic antibacterial agent using a transmission electron microscope.)

(2) An existing ratio of the inorganic antibacterial particles having a particle diameter of not less than 2 μm, which is calculated by the following formula, is not more than 1%.
The formula is:

Existing ratio (%) = 100× (number of the inorganic

antibacterial particles having a diameter of not less than

2 μm)/(a total number of the inorganic antibacterial

particles used for measuring the particle diameter)

(3) An existing ratio of the inorganic antibacterial particles per 1 μm$^2$ is not less than 70%, wherein the existing ratio is calculatedbythe following formula, and is obtained by observing a slice of the inorganic antibacterial agent using a transmission electron microscope.
The formula is:

Existing ratio (%) = 100× (Number of domains in which the

inorganic antibacterial particles are present)/(a total

number of domains which is observed if the inorganic

antibacterial particles are present or not).

**Fig.1**

**Fig.2**

*Fig.3*

*Fig.4*

*Fig.5*

2

12

11

*Fig.6*

13

10

14

# Fig.7

| | EXAMPLE 1 | EXAMPLE 2 | EXAMPLE 3 | EXAMPLE 4 | EXAMPLE 5 | EXAMPLE 6 | EXAMPLE 7 | COMPARATIVE EXAMPLE 1 |
|---|---|---|---|---|---|---|---|---|
| STIRRING &MIXING | DONE | DONE | DONE | DONE | UNDONE | DONE | DONE | UNDONE |
| ROTATIONAL SPEED OF MIXER | 1000rpm | 1000rpm | 450 rpm | 450 rpm | — | 450 rpm | 1000 rpm | — |
| MIXING TIME | 2 MIN. | 2 MIN. | 1 MIN. | 1 MIN. | — | 1 MIN. | 2 MIN. | |
| KNEADING SPEED | 500 rpm | 300 rpm | 300 rpm | 300 rpm | 300 rpm | 300 rpm | 500 rpm | 300 rpm |
| NUMBER OF KNEADING SCREW ZONES OF KNEADING MACHINE | 2STEPS | 2STEPS | 2STEPS | 1STEP | 1STEP | 1STEP | 2STEPS | 1STEP |
| PRESET CYLINDER TEMPERATURE OF KNEADING MACHINE | 80℃ | 80℃ | 80℃ | 80℃ | 80℃ | 70℃ | 80℃ | 70℃ |
| EXISTING RATIO OF PARTICLES HAVING SF2 NOT MORE THAN 200 | 95% | 93% | 86% | 87% | 65% | 74% | 89% | 60% |
| EXISTING RATIO OF PARTICLES HAVING SF2 RANGING FROM 100 TO 150 | 81% | 74% | 50% | 59% | 44% | 59% | 70% | 48% |
| EXISTING RATIO OF PARTICLES NOT LESS THAN $2\mu m$ | 0% | 0% | 0.1% | 43% | 0.8% | 1.6% | 0.1% | 49% |
| EXISTING RATIO OF PARTICLES PER $1\mu m^2$ | 96% | 75% | 55% | 46% | 51 % | 98% | 82% | 30% |
| VOLUME AVERAGE PARTICLE DIAMETER OF INORGANIC ANTIBACTERIAL PARTICLES D50 | 0.1$\mu m$ | 0.1$\mu m$ | 0.1$\mu m$ | 2.0$\mu m$ | 0.1$\mu m$ | 0.1$\mu m$ | 0.1$\mu m$ | 2.0$\mu m$ |
| CONTENTS OF INORGANIC ANTIBACTERIAL PARTICLES | 20 wt% | 20 wt% | 20 wt% | 20 wt% | 20 wt% | 70 wt% | 60 wt% | 20 wt% |

## Fig.8

| | | EXAMPLE 1 | EXAMPLE 2 | EXAMPLE 3 | EXAMPLE 4 | EXAMPLE 5 | EXAMPLE 6 | EXAMPLE 7 | COMPARATIVE EXAMPLE 1 |
|---|---|---|---|---|---|---|---|---|---|
| ANTIBACTERIAL ACTIVITY (MOLDED PELLET) | (MAXIMUM NUMBER OF BACTERIA) | <100 | 170 | $2.15 \times 10^3$ | $1.07 \times 10^3$ | $4.85 \times 10^3$ | 780 | <100 | $6.89 \times 10^4$ |
| | (MINIMUM NUMBER OF BACTERIA) | <100 | <100 | 310 | <100 | 420 | <100 | <100 | $2.15 \times 10^3$ |
| ANTIBACTERIAL ACTIVITY (FIBER) | | <100 | <100 | $3.28 \times 10^3$ | $1.18 \times 10^3$ | $5.84 \times 10^3$ | 790 | <100 | $2.45 \times 10^4$ |
| INTRA-LOT VARIATION IN ANTIBACTERIAL ACTIVITY OF INORGANIC ANTIBACTERIAL PARTICLES | | A | A | B | C | C | B | B | D |
| NUMBER OF TIMES OF BREAKAGE YARN AT SPINNING ($\times 10^{-2}$ TIMES) | | 0.1 | 0.1 | 0.3 | 1.1 | 0.5 | 1.5 | 0.3 | 1.8 |

EP 1 442 659 A1

## INTERNATIONAL SEARCH REPORT

| International application No. |
| --- |
| PCT/JP02/10671 |

**A. CLASSIFICATION OF SUBJECT MATTER**
Int.Cl$^7$ A01N59/16, C08J5/00, C08K9/08, C08L101/00, D01F1/10

According to International Patent Classification (IPC) or to both national classification and IPC

**B. FIELDS SEARCHED**

Minimum documentation searched (classification system followed by classification symbols)
Int.Cl$^7$ A01N59/16, C08J5/00, C08K9/08, C08L101/00, D01F1/10

Documentation searched other than minimum documentation to the extent that such documents are included in the fields searched

| Jitsuyo Shinan Koho | 1922–1996 | Toroku Jitsuyo Shinan Koho | 1994–2002 |
| --- | --- | --- | --- |
| Kokai Jitsuyo Shinan Koho | 1971–2002 | Jitsuyo Shinan Toroku Koho | 1996–2002 |

Electronic data base consulted during the international search (name of data base and, where practicable, search terms used)
CA(STN), WPI/L(QUESTEL), REGISTRY(STN)

**C. DOCUMENTS CONSIDERED TO BE RELEVANT**

| Category* | Citation of document, with indication, where appropriate, of the relevant passages | Relevant to claim No. |
| --- | --- | --- |
| X | Sangi Co., Ltd., "Yuryoku Kakusha no Kokin Bokabi Gijutsu Ginkei Muki Kokinzai [Apasaida]", Japan Energy & Technology Intelligence, Published on 01 June, 2001 (01.06.01), Vol.49, No.7, page 112 | 1,5-16 |
| X | Sangi Co., Ltd., "Nerikomigata Plastic Kokinzai", Rubber and Plastics, Published on 1994, Vol.46, No.1, pages 61 to 64 | 1,6-16 |
| X | Koji SUGIURA, "Kokin Boshu Kakozai Seikin Kakozai/ Ginkei Muki Kokinzai [Nobaron]", Kako Gijutsu, Published on 10 August, 2001 (10.08.01), Vol.36, No.8, pages 30 to 31 | 1,5,6,8-16 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 23 January, 2003 (23.01.03) | 12 February, 2003 (12.02.03) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

**INTERNATIONAL SEARCH REPORT**

| International application No. |
| --- |
| PCT/JP02/10671 |

C (Continuation). DOCUMENTS CONSIDERED TO BE RELEVANT

| Category* | Citation of document, with indication, where appropriate, of the relevant passages | Relevant to claim No. |
| --- | --- | --- |
| X | JP 2000-34658 A (Nippon Ester Kabushiki Kaisha), 02 February, 2000 (02.02.00), Column 4, line 43 to column 6, line 36 (Family: none) | 1,5,6,8-16 |
| X | JP 9-268101 A (Kabushiki Kaisha Kokin Techno), 14 October, 1997 (14.10.97), Column 2, lines 17 to 35; tables 1, 2; column 9, lines 5 to 8 (Family: none) | 1,5,6,8-16 |
| X | JP 9-176949 A (Unitika Ltd.), 08 July, 1997 (08.07.97), Column 10, line 31 to column 11, line 9 (Family: none) | 1,5,6,8-16 |
| X | JP 9-78430 A (Oji Paper Co., Ltd.), 25 March, 1997 (25.03.97), Column 3, line 30 to column 4, line 23 (Family: none) | 1,5,6,8-16 |
| X | JP 8-155480 A (Unitika Ltd.), 18 June, 1996 (18.06.96), Column 2, lines 12 to 29; column 3, lines 1 to 6; column 4, line 12 (Family: none) | 1,5-8,10-16 |
| X | JP 10-237720 A (Nippon Ester Kabushiki Kaisha), 08 September, 1998 (08.09.98), Column 5, line 19 to column 12 (Family: none) | 1,5-12,15,16 |
| X | JP 10-204342 A (Kansai Paint Co., Ltd.), 04 August, 1998 (04.08.98), Column 3, lines 10 to 17; column 4, lines 3 to 11 (Family: none) | 1,6-16 |
| X | JP 7-189033 A (Asahi Chemical Industry Co., Ltd.), 25 July, 1995 (25.07.95), Column 5, line 17 to column 6, line 16 (Family: none) | 1,6-12,15,16 |
| X | US 5614568 A (JAPAN SYNTHETIC RUBBER CO., LTD.), 25 March, 1997 (25.03.97), Columns 16 to 18 & EP 606762 A2  & JP 6-240094 A & DE 69320167 C | 1,6-12,15,16 |
| X | JP 4-77538 A (Tonen Chemical Corp.), 11 March, 1992 (11.03.92), Page 3, upper left column, lines 5 to 9; page 4, lower right column to page 6, upper left column (Family: none) | 1,5-8,10-12, 15,16 |

Form PCT/ISA/210 (continuation of second sheet) (July 1998)

## INTERNATIONAL SEARCH REPORT

| International application No. |
|---|
| PCT/JP02/10671 |

---

**Box I    Observations where certain claims were found unsearchable (Continuation of item 2 of first sheet)**

This international search report has not been established in respect of certain claims under Article 17(2)(a) for the following reasons:

1. ☐ Claims Nos.:

   because they relate to subject matter not required to be searched by this Authority, namely:

2. ☒ Claims Nos.: part of 1 to 16

   because they relate to parts of the international application that do not comply with the prescribed requirements to such an extent that no meaningful international search can be carried out, specifically:
   (See extra sheet.)

3. ☐ Claims Nos.:

   because they are dependent claims and are not drafted in accordance with the second and third sentences of Rule 6.4(a).

---

**Box II    Observations where unity of invention is lacking (Continuation of item 3 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.

☐    No protest accompanied the payment of additional search fees.

---

Form PCT/ISA/210 (continuation of first sheet (1)) (July 1998)

**INTERNATIONAL SEARCH REPORT**

International application No.

PCT/JP02/10671

Continuation of Box No.I-2 of continuation of first sheet(1)

In each of the inventions as set forth in claims 1 to 16, it is specified as the requirement (1) "the content of inorganic particles showing a shape factor 2 SF2 (SF2=$100\pi L^2/(4A)$) of 200 or below being 80% or more". This is the essential requirement in the inventions as set forth in claims 2 to 4. However, the "particles having a shape factor of 200 or below" as described therein cannot be embodied and thus the meaning of this technical matter is unclear. Therefore, it cannot be recognized that the technical feature is sufficiently specified on the basis of the above technical matter.

Such being the case, the search was carried out on the parts supported by the description and disclosed therein, i.e., the requirement (2) "the content of inorganic antimicrobial particles with a particle size of 2 μm or more being 1% or less" and the requirement (3) "the ratio of areas having inorganic antimicrobial particle per 1 μm² being 70% or more". No search was made on claims 2 to 4.

Form PCT/ISA/210 (extra sheet) (July 1998)